# EUROPEAN PATENT APPLICATION

(11) **EP 2 487 517 A1**
(43) Date of publication of application: **15.08.2012**
(21) Application number: 12153559.5
(22) Date of filing: 02.02.2012
(51) Int. Cl.: G02B 6/44

(54) **Optical waveguide distribution device**

(30) Priority: 09.02.2011 DE 202011002543 U
(71) Applicant: CCS Technology, Inc., Wilmington, DE 19803 (US)
(72) Inventor: Ciechomski, Tomasz Andrzej, 99-400 Lowicz (PL); Fabrykowski, Grzegorz, 95-010 Gmina Strykow (PL); Matthies, Jürgen, Dipl.-Ing., 58300 Wetter (DE)
(74) Representative: Sturm, Christoph

(57) **Abstract**

A patch panel (25) that divides the interior of a housing into a first interior region, which is accessible from the front wall of the housing, and a second interior region, which is accessible from the top wall of the housing is disclosed. A section (30), which bears the adapters (26,27), of the patch panel in an operating position of the patch panel is set at an angle both with respect to the horizontally running base wall and top wall and with respect to the vertically running rear wall and front wall.

## Description

### RELATED APPLICATIONS

This application claims the benefit of priority of German Utility Model Serial No. 202011002543.8 filed on February 9, 2011 the content of which is relied upon and incorporated herein by reference in its entirety.

The present invention relates to an optical waveguide distribution device in accordance with the preamble of Claim 1.

When designing optical waveguide cable networks, optical waveguide distribution devices are required for ensuring structured wiring. A demand placed on such optical waveguide distribution devices is for said devices to be populated to the maximum extent with a high packing density and with at the same time a low mechanical load on the optical waveguides.

EP 2 060 942 A2 has disclosed an optical waveguide distribution device in the form of a separating box for a modular system comprising a plurality of optical waveguide distribution devices, said optical waveguide distribution device having a housing and assemblies positioned in an interior of the housing for connecting optical waveguides. The housing of the optical waveguide distribution device known from this prior art has a lower base wall, an upper top wall, a rear wall, a front wall and side walls which extend between the base wall and the top wall, the rear wall and the front wall and together delimit or define the interior of the housing of the optical waveguide distribution device. The front wall of the housing forms two door sections, namely a door section which is capable of being pivoted about a vertical axis and a door section which is capable of being pivoted about a horizontal axis. As assemblies for connecting optical waveguides, firstly splicing cassettes and secondly adapters, accommodated on a patch panel, for optical waveguide plugs are positioned in the interior of the housing of the optical waveguide distribution device.

The patch panel which accommodates the adapters divides the interior of the housing of the optical waveguide distribution device in accordance with EP 2 060 942 A2 into two interior regions, namely a first interior region, which is accessible when the door section which is capable of being pivoted about the vertical axis is open and a second interior region which is accessible when that door section of the front wall which is capable of being pivoted about the horizontal axis is open. In accordance with this prior art, the patch panel is set at an angle and is fixed in its relative position in the housing and thereafter cannot be changed.

Against this background, the present invention is based on the problem of providing a novel optical waveguide distribution device.

This problem is solved by an optical waveguide distribution device having the features of Claim 1.

According to the invention, the patch panel divides the interior of the housing into a first interior region, which is accessible from the front wall of the housing, and a second interior region, which is accessible from the top wall of the housing, wherein a section, which bears the adapters, of the patch panel in an operating position of the patch panel is set at an angle both with respect to the horizontally running base wall and top wall and with respect to the vertically running rear wall and front wall, namely in such a way that, in the operating position of the patch panel, adapters which are accessible from the first interior region are directed downwards at an angle and adapters which are accessible from the second interior region are directed upwards at an angle and wherein the patch panel is capable of being pivoted about a horizontally running axis from the operating position into a service position, and vice versa.

The invention enables improved access to the adapters of the patch panel.

By virtue of the angled position of the patch panel according to the invention in the housing of the optical waveguide distribution device and the fact that said patch panel is capable of being pivoted in accordance with the invention ensures good access to all of the adapters of the patch panel, namely both to the adapters protruding into the first interior region and to the adapters protruding into the second interior region, said adapters being accessible from the respective interior region.

In accordance with an advantageous development of the invention, that section of the patch panel which bears the adapters in the operating position of said patch panel is set at an angle with respect to the horizontally running base wall and therefore with respect to the horizontal through an angle of between 20° and 70°, in particular through an angle of between 35° and 55°, preferably through an angle of approximately 45°. The above angled position of the patch panel through an angle within the above angle ranges ensures firstly good accessibility of the adapters of the patch panel, in particular of the adapters accessible from below from the first interior region, in the operating position of the patch panel and secondly that optical waveguides are only subjected to a slight load when the patch panel is moved from the operating position into the service position, with the result that the transmission properties of the optical waveguides are not impaired.

Preferably, the top wall can be opened exclusively when the front wall is open, wherein the patch panel is capable of being pivoted from the operating position into the service position and vice versa exclusively when the top wall is open. This configuration of the optical waveguide distribution device enables successive and limited access to the individual interior regions of the optical waveguide distribution device. When the front wall is open, initially only the first interior region is accessible. In order to access the second interior region, first the front wall and then the top wall need to be open. Only then is it possible for the patch panel to be pivoted from the operating position into the service position.

In accordance with an advantageous development of the invention, that section of the patch panel which bears the adapters on a lower side of said patch panel acts on a horizontally running hinge over a section which is bent back downwards with respect to this section, wherein the horizontally running hinge is arranged above the base wall, and wherein a vertical distance between the hinge and the base wall is greater than a vertical distance between the hinge and the lower side of that section of the patch panel which bears the adapters. This configuration enables particularly preferred pivoting of the patch panel with minimum loading of the optical waveguides when the patch panel is pivoted.

Preferred developments of the invention result from the dependent claims and the description below. Exemplary embodiments of the invention will be explained in more detail with reference to the drawing, in which:
- Figure 1: shows a perspective view of an optical waveguide distribution device according to the invention in the completely closed state together with optical waveguides inserted therein;
- Figure 2: shows the optical waveguide distribution device shown in figure 1 in the partially open state, namely open at a front wall, with a partially broken-away side wall and with a patch panel pivoted into an operating position;
- Figure 3: shows the optical waveguide distribution device shown in figure 2 in the completely open state, namely open at a front wall and a top wall, with a partially broken-away side wall;
- Figure 4: shows the optical waveguide distribution device shown in figure 3 with a patch panel pivoted into a service position;
- Figure 5: shows a cross section through the optical waveguide distribution device shown in figure 1;
- Figure 6: shows the optical waveguide distribution device shown in figure 1 together with three other optical waveguide distribution devices; and
- Figure 7: shows the optical waveguide distribution device shown in figure 1 together with another optical waveguide distribution device.

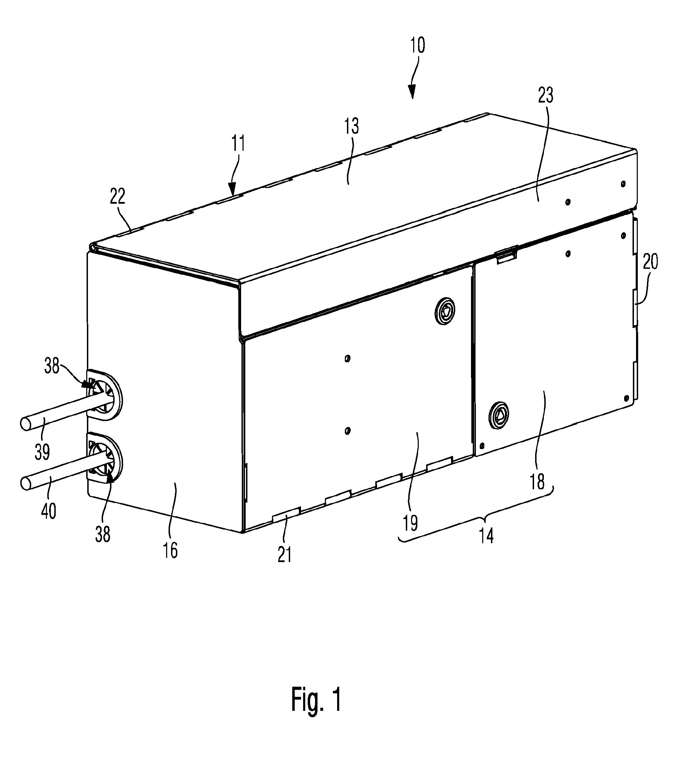

Figures 1 to 5 show different views and details of an optical waveguide distribution device 10 according to the invention.

The optical waveguide distribution device 10 according to the invention has a housing 11, the housing 11 having a lower base wall 12, an upper top wall 13, a front wall 14, a rear wall 15 and side walls 16 and 17 extending between these walls 12, 13, 14 and 15. The walls 12 to 17 of the housing 11 of the optical waveguide distribution device 10 define an interior of the housing 11.

In the exemplary embodiment shown, the front wall 14 is designed to be divided and comprises a door section 18, which is capable of being pivoted about a vertical axis, and a door section 19, which is capable of being pivoted about a horizontal axis, a hinge 20 being associated with the side wall 17 for pivoting the first door section 18 about the vertical axis, and a hinge 21 being associated with the base wall 12 for pivoting the second door section 19 about the horizontal axis.

The upper top wall 13 of the housing 10 is in the form of a cover which is capable of being pivoted about a horizontal axis, a hinge 22, about which the top wall 13 is capable of being pivoted about the horizontal axis, being associated with the rear wall 15 of the housing 11.

The top wall 13 is bent back on the side opposite the hinge 22, with a section 23 which is bent back on this side and is fixedly connected to the top wall 13 being part of the front wall 14 of the housing 11 in the completely closed state of the housing 11.

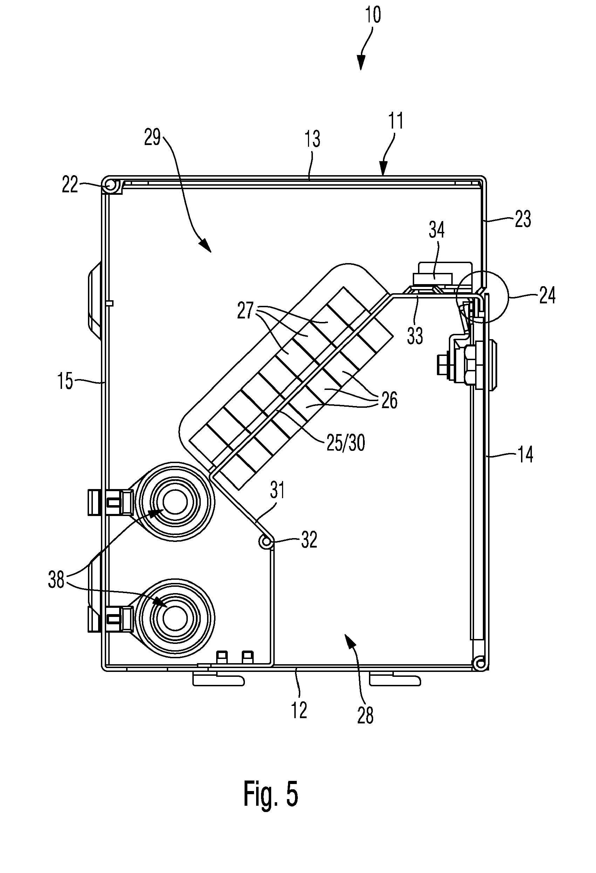

As can be seen from figures 1 and 5, in the completely closed state of the housing 11, the two door sections 18 and 19 of the front wall 14 cover the section 23 partially, with the result that the top wall 13 of the housing 11 can only be opened and pivoted about the hinge 22 when the door sections 18 and 19 and therefore the front wall 14 have already been opened. This region of overlap between the door sections 18 and 19 and the section 23 is formed in the circled region 24 in figure 5.

In the interior of the housing 11 of the optical waveguide distribution device 10, a patch panel 25, which bears a plurality of adapters 26, 27, is arranged as an assembly for connecting optical waveguides. The adapters 26, 27 serve the purpose of connecting optical waveguides via optical waveguide plugs.

The patch panel 25 divides the interior of the housing 11 into a first interior region 28, which is accessible from the front wall 14 of the housing 11, and a second interior region 29, which is accessible from the top wall 13 of the housing 11.

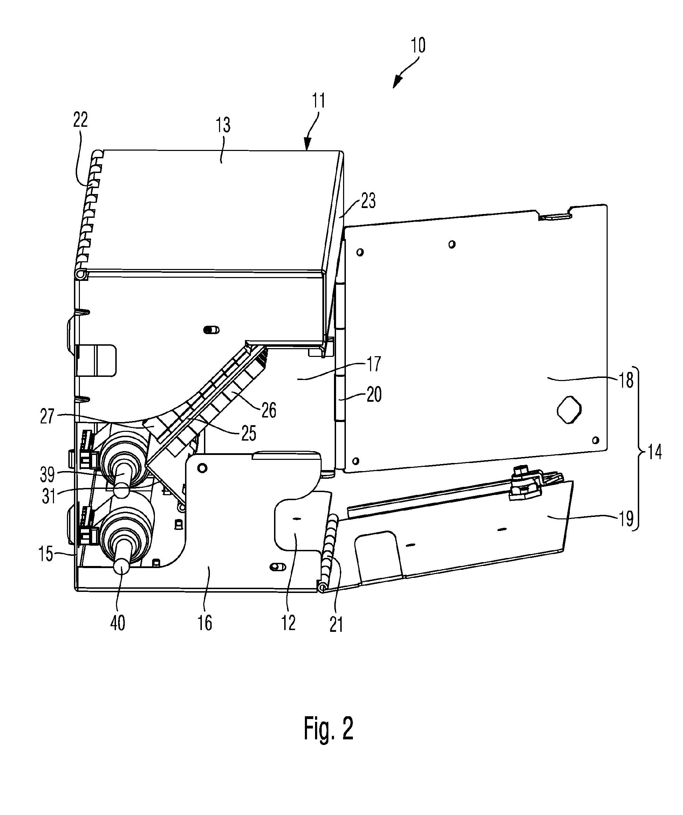

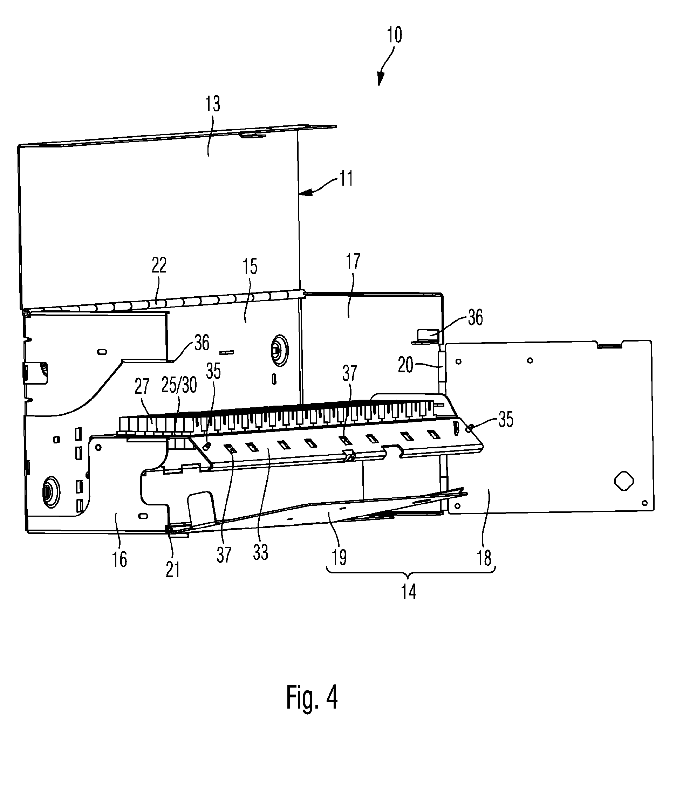

A section 30, which bears the adapters 26 and 27, of the patch panel 25, said section being shown in an operating position of the patch panel 25 in figures 2, 3 and 5 and in a service position of the patch panel 25 in figure 4, is set at an angle both with respect to the horizontally running base wall 12 and the top wall 13 and with respect to the vertically running rear wall 15 and the front wall 14 in the operating position of the patch panel 25, namely in such a way that, in the operating position of the patch panel 25, the adapters 26 which are accessible from the first interior region 28 are directed downwards at an angle and the adapters 27 which are accessible from the second interior region 29 are directed upwards at an angle. When the two door sections 18 and 19 of the front wall 14 are open, the first interior region 28 is accessible from the front wall 14, with in this case the adapters 26 which protrude downwards at an angle into the first interior region 28 being accessible as well.

In order to access the adapters 27 which protrude upwards at an angle into the second interior region 29, the top wall 13 also needs to be pivoted and opened in order to thus provide access to the second interior region 29.

In order in this case to facilitate access to the adapters 27 which protrude into the second interior region 29, the patch panel 25 is capable of being pivoted about a horizontally running axis from the operating position shown in figures 2, 3 and 5 into the service position shown in figure 4, and vice versa, with it being possible for this pivoting movement to be performed exclusively when the top wall 13 is open.

In the service position (see figure 4), that section 30 of the patch panel 25 which bears the adapters 26, 27 runs approximately parallel to the base wall 12 of the housing 11 of the optical waveguide distribution device 10.

In the operating position (see in particular figure 5) of the patch panel 25, that section 30 of said patch panel which bears the adapters 26, 27 is set at an angle with respect to the horizontally running base wall 12 through an angle of between 20 and 70°, in particular through an angle of between 35 and 55°, preferably through an angle of approximately 45°.

Such an angle firstly enables good accessibility of the adapters 26 which are accessible from the first interior region 28 in the case of the patch panel 25 assuming the operating position and secondly means that, when the patch panel 25 is pivoted from the operating position into the service position, optical waveguides which are contact-connected to the adapters 26, 27 of the patch panel 25 via optical waveguide plugs are only subjected to low mechanical stress.

That section 30 of the patch panel 25 which bears the adapters 26, 27, on a lower side of said patch panel, acts on a hinge 32 over a section 31 which is bent back downwards with respect to the section 30, with it being possible for the patch panel 25 to be pivoted about said hinge 32 about the horizontal axis between the operating position and the service position. In the exemplary embodiment shown, the section 31 of the patch panel 25 is bent back downwards through approximately 90° with respect to the section 25 of said patch panel.

As can best be seen from figure 5, the horizontally running hinge 32, about which the patch panel 25 can be pivoted, is positioned above the base wall 12. A vertical distance between the hinge 32 and the base wall 12 is in this case preferably greater than a vertical distance between the hinge 32 and the lower side of that section 30 of the patch panel 25 which bears the adapters. As a result, good accessibility of the adapters with low mechanical loading of the optical waveguides is ensured when the patch panel is pivoted.

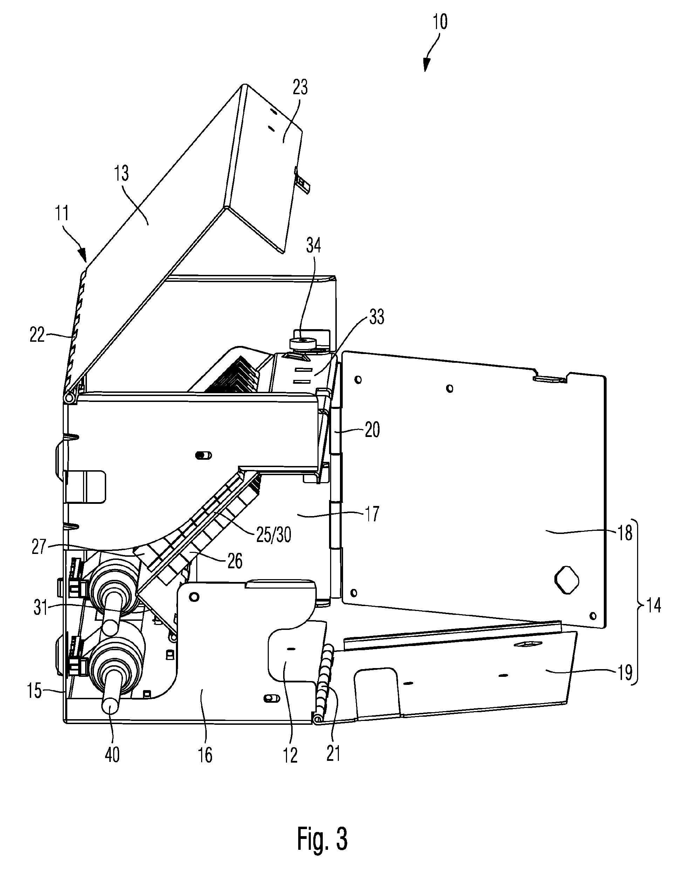

That section 30 of the patch panel 25 which bears the adapters 26, 27 can be fixed on an upper side of said patch panel in the operating position on the side walls 16, 17 of the housing 11 over a section 33 which is bent back downwards with respect to this section 30, namely using fastening elements 34 which are associated with the side walls 16, 17. Thus, as shown in figure 4, pin-like protrusions 35 are formed on the section 33 externally and adjacent to the side walls 16 and 17, and said protrusions 35 protrude into cut-outs in inwardly protruding lugs 36 of the side walls 16 and 17, in the operating position of the patch panel 25 (see figure 3), and can then be fixed to the lugs 36 via the fastening elements 34. Only when the top wall 13 is open is it possible to gain access to the fastening elements 34 and for the patch panel 25 to be released from the operating position and therefore pivoted into the service position.

The section 33, which is bent back with respect to that section 30 of the patch panel 25 which bears the adapters on the upper side of said section 30 furthermore has, as can best be seen from figure 4, openings 37, into which optical waveguide holders can be inserted in order to manipulate optical waveguides in the interior of the housing 11 which are guided in pigtails and are contact-connected to the adapters 26 and 27 via plugs.

Preferably, the optical waveguide distribution device 10 is equipped or prefabricated at the factory end with pigtails inserted into the respective adapters 27 via optical waveguide plugs on the adapters 27 of the patch panel 25 which are accessible from the second interior region 29. The optical waveguides of these pigtails, which are connected to the adapters 27 and are stored in the second interior region 29 of the housing 11, are passed out of the second interior region 29, as can best be seen from figures 1, 2 and 3, namely via openings 38, which are introduced into the side wall 16. These openings 38 serve the purpose in particular of accommodating so-called furcation adapters in order to split optical waveguides which are inserted into the second interior region 29 of the housing 11 via the cables 39 and 40 shown in figures 1 and 2 into the individual pigtails.

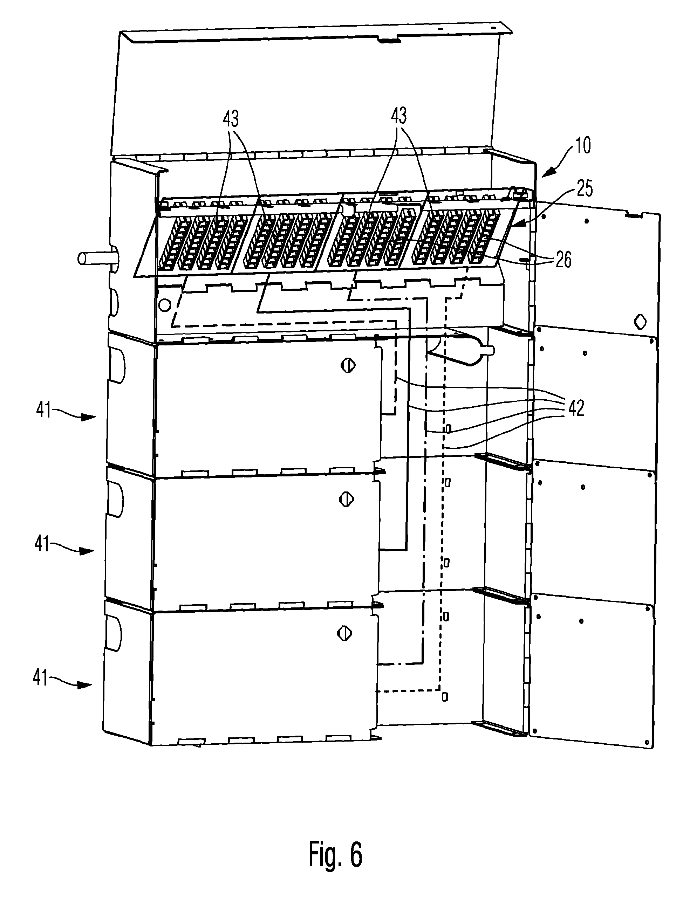

Figures 6 shows the optical waveguide distribution device 10 according to the invention together with three further optical waveguide distribution devices 41, which are combined to form a system, wherein in the arrangement shown in figure 6, the optical waveguide distribution devices 41 are used as so-called provider distribution device and the optical waveguide distribution device 10 according to the invention is used as a so-called customer distribution device. The provider distributing devices 41 can be used to split optical waveguides which are guided in optical waveguide cables belonging to providers in the region of the optical waveguide distribution devices 41 and to supply said optical waveguides, in the direction of the paths 42 shown schematically in figure 6, to different sections 43 of the patch panel 25 of the customer distribution device 10, namely to those adapters 26 of the patch panel 25 which are accessible from the first interior region 28.

In this case, a provider-individual section 43 of the patch panel 25 is associated with each provider. In the system shown in figure 6, the patch panel 25 comprises four provider-individual sections 43 for four different providers. By virtue of corresponding grouping and manipulation of the pigtails which are contact-connected to the adapters 27 of the patch panel 25 starting from the second interior region 29, a group of four optical waveguides can thus be supplied from four different providers to each customer.

Mention is made of the fact that the system shown in figure 6, which serves to supply four fibres of four different providers in the direction of a customer, is purely exemplary in nature. It is of course also possible to choose a system in which two or three fibres or even more than four fibres of in each case different providers are supplied to each customer.

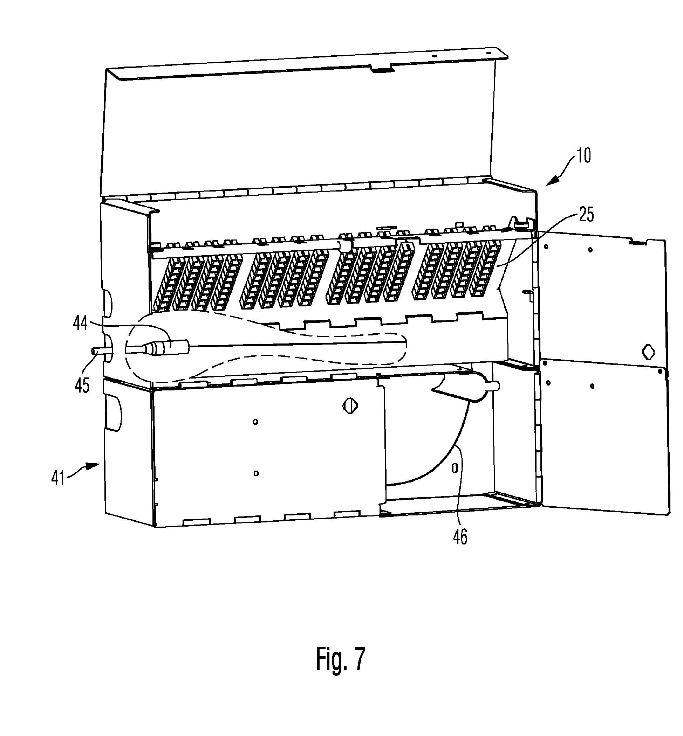

Figure 7 shows the optical waveguide distribution device 10 according to the invention together with a further optical waveguide distribution device 41, wherein figure 7 shows that an optical waveguide 46 which is supplied to the customer optical waveguide distribution device 10 via a so-called provider optical waveguide distribution device 41, can also be guided past the patch panel 25 and can be spliced directly so as to form a splice 44 with an optical waveguide of a cable 45 leading to a customer.

List of Reference Symbols
- 10: Optical waveguide distribution device
- 11: Housing
- 12: Base wall
- 13: Top wall
- 14: Front wall
- 15: Rear wall
- 16: Side wall
- 17: Side wall
- 18: Door section
- 19: Door section
- 20: Hinge
- 21: Hinge
- 22: Hinge
- 23: Section
- 24: Region
- 25: Patch panel
- 26: Adapter
- 27: Adapter
- 28: Interior region
- 29: Interior region
- 30: Section
- 31: Section
- 32: Hinge
- 33: Section
- 34: Fastening element
- 35: Protrusion
- 36: Lug
- 37: Opening
- 38: Opening
- 39: Cable
- 40: Cable
- 41: Optical waveguide distribution device
- 42: Path
- 43: Section
- 44: Cable
- 45: Splice
- 46: Optical waveguide

## Claims

1. Optical waveguide distribution device, with a housing (11) and with assemblies accommodated in an interior of the housing (11) for connecting optical waveguides, the housing having a lower base wall (12), an upper top wall (13), a rear wall (15), a front wall (14) and side walls (16, 17) extending between the base wall, the top wall, the rear wall and the front wall, and adapters (26, 27), accommodated on a patch panel (25), for optical waveguide plugs being positioned as assemblies for connecting optical waveguides in the interior of the housing, **characterized in that**
the patch panel (25) divides the interior of the housing (11) into a first interior region (28), which is accessible from the front wall (14) of the housing, and a second interior region (29), which is accessible from the top wall (13) of the housing;
a section (30), which bears the adapters (26, 27), of the patch panel (25) in an operating position of the patch panel (25) is set at an angle both with respect to the horizontally running base wall and top wall and with respect to the vertically running rear wall and front wall, namely in such a way that, in the operating position of the patch panel (25), adapters (26) which are accessible from the first interior region (28) are directed downwards at an angle and adapters (27) which are accessible from the second interior region (29) are directed upwards at an angle;
the patch panel (25) is capable of being pivoted about a horizontally running axis between the operating position and a service position.

2. Optical waveguide distribution device according to Claim 1, **characterized in that** the front wall (14) has a first door section (18), which is capable of being pivoted about a vertical axis, and a second door section (19), which is capable of being pivoted about a horizontal axis.

3. Optical waveguide distribution device according to Claim 1 or 2, **characterized in that** the top wall (13) forms a cover which is capable of being pivoted about a horizontal axis.

4. Optical waveguide distribution device according to one of Claims 1 to 3, **characterized in that** the top wall (13) can be opened exclusively when the front wall (14) is open.

5. Optical waveguide distribution device according to one of Claims 1 to 4, **characterized in that** the patch panel (25) is capable of being pivoted from the operating position into the service position and vice versa exclusively when the top wall (13) is open.

6. Optical waveguide distribution device according to one of Claims 1 to 5, **characterized in that** the patch panel (25) is capable of being pivoted downwards about the horizontally running axis from the operating position into the service position in such a way that that section (30) of the patch panel (25) which bears the adapters runs approximately parallel to the base wall (12).

7. Optical waveguide distribution device according to one of Claims 1 to 6, **characterized in that** that section (30) of the patch panel (25) which bears the adapters in the operating position of said patch panel is set at an angle with respect to the horizontally running base wall (12) through an angle of between 20° and 70°, in particular through an angle of between 35° and 55°, preferably through an angle of approximately 45°.

8. Optical waveguide distribution device according to one of Claims 1 to 7, **characterized in that** that section (30) of the patch panel (25) which bears the adapters on a lower side of said patch panel acts on a horizontally running hinge (32) over a section (31) which is bent back downwards with respect to this section (30) through preferably approximately 90°.

9. Optical waveguide distribution device according to Claim 8, **characterized in that** the horizontally running hinge (32) is arranged above the base wall (12).

10. Optical waveguide distribution device according to Claim 8 or 9, **characterized in that** a vertical distance between the hinge (32) and the base wall (12) is greater than a vertical distance between the hinge (32) and the lower side of that section (30) of the patch panel (25) which bears the adapters.

11. Optical waveguide distribution device according to one of Claims 1 to 10, **characterized in that** that section (30) of the patch panel (25) which bears the adapters, on an upper side of said patch panel, can be fixed in the operating position using fastening elements (34) associated with the side walls (15, 16) over a section (33) which is bent back downwards with respect to this section (30).

12. Optical waveguide distribution device according to Claim 11, **characterized in that** the section (32) which is bent back on the upper side of that section (30) of the patch panel (25) which bears the adapters has openings (37) for accommodating optical waveguide holders.

13. Optical waveguide distribution device according to one of Claims 1 to 12, **characterized in that** said optical waveguide distribution device is equipped with pigtails on the adapters (27) of the patch panel (25) which are accessible from the second interior region (29), said pigtails being inserted into the adapters (27) via optical waveguide plugs, and the optical waveguides of the pigtails being passed out of the housing (11) out of the second interior region (29) thereof via at least one opening (28) in a side wall (15) of the housing (11).
